# FASCICULE DE BREVET EUROPEEN

(11) **EP 0 625 451 B1**
(45) Date de publication et mention de la délivrance du brevet: **11.12.1996**
(21) Numéro de dépôt: 94107691.1
(22) Date de dépôt: 16.05.1994
(51) Int. Cl.: B60R 25/02

(54) **Antivol de direction pour véhicule automobile**
Lenkradschloss für Kraftfahrzeuge
Vehicle steering lock

(30) Priorité: 21.05.1993 FR 9306120
(43) Date de publication de la demande: 23.11.1994
(73) Titulaire: VALEO SECURITE HABITACLE, 78290 Croissy-Sur-Seine (FR)
(72) Inventeur: Soliot, Lionel, F-58000 Nevers (FR)
(74) Mandataire: Gamonal, Didier

(56) Documents cités:
- DE-A- 2 632 908
- FR-A- 2 699 476

## Description

La présente invention concerne d'une manière générale un antivol pour véhicule automobile.

Elle concerne plus particulièrement les antivols comprenant un organe de verrouillage ou pêne destiné au blocage d'un élément essentiel du véhicule, par exemple la colonne de direction ou le volant.

De tels antivols comprennent en outre une serrure constituée d'un stator et d'un rotor actionnés par une clé codée et commandant au cours de sa rotation le mouvement du pêne.

En général, dans un antivol de ce type, la commande du pêne s'effectue par une tirette reliée à une came elle-même solidaire du rotor de la serrure, ladite came ayant pour fonction de transformer le mouvement de rotation du rotor de la serrure en un mouvement de translation de la tirette et du pêne associés.

Si cette disposition donne globalement satisfaction, lorsque le pêne passe d'une position de verrouillage à une position de déverrouillage par un déplacement coaxial à l'ensemble de la serrure, il en va tout autrement lorsque le pêne est perpendiculaire à l'axe général de la serrure et donc de la tirette car il est alors nécessaire de transformer le mouvement coaxial de la tirette en un mouvement de basculement angulaire du pêne.

Cette transformation de mouvement ne peut s'effectuer qu'avec un organe de liaison pêne-tirette, organe de liaison qui doit être de construction simple de manière à ne pas augmenter le coût total d'un antivol de ce type de manière prohibitive.

L'ensemble des constituants d'un tel antivol est destiné à être monté dans un boîtier solidaire de l'organe du véhicule à verrouiller, par exemple la colonne de direction.

De plus en plus souvent, les pênes sont montés séparément dans le boîtier de l'antivol et pivotent autour d'un axe coaxial à la serrure. L'organe de liaison pêne-tirette étant solidaire de l'ensemble de la serrure, il s'agit, lors de l'introduction de cet ensemble dans le boîtier de l'antivol, de rendre solidaire le pêne dudit organe de liaison quelle que soit la position angulaire du pêne et sans intervention spécifique de façon à pouvoir automatiser l'ensemble des opérations d'assemblage.

La présente invention résout ces problèmes et propose à cet effet un antivol de direction pour véhicule automobile comprenant un organe de verrouillage ou pêne monté pivotant dans un boîtier solidaire d'une colonne de direction, le pivotement de l'organe de verrouillage s'effectuant selon une direction perpendiculaire à l'axe d'un ensemble serrure muni d'une came de commande équipée d'une tirette et des moyens de commande aptes à faire passer le pêne d'une position de verrouillage à une position de déverrouillage, constitués d'un organe de liaison ou coulisseau solidaire de la tirette et mobile en translation parallèlement à l'axe de l'ensemble serrure selon les enseignements du document DE-A-2632908 et caractérisé en ce que
l'organe de liaison ou coulisseau est fixe en rotation par rapport au boîtier, le passage de l'organe de verrouillage ou pêne de ladite position de verrouillage à ladite position de déverrouillage étant obtenu par la translation sans rotation de l'organe de liaison ou coulisseau ;
en ce que l'organe de verrouillage ou pêne comprend à l'une de ses extrémités une rotule apte à coopérer avec une rainure axiale ménagée dans l'organe de liaison ou coulisseau
et en ce que la rainure axiale comporte un entrée évasée par deux chanfreins.

Selon d'autres caractéristiques de l'invention :
- la rainure axiale présente un premier palier raccordé à un second palier par une rampe ;
- la largeur des paliers est sensiblement égale au diamètre de la rotule du péne ;
- l'antivol comprend des moyens de guidage du coulisseau constitués par un fourreau ménagés dans le boîtier ;
- le fourreau comporte des rainures intérieures du guidage.

L'invention sera mieux comprise avec la description qui va suivre en regard des dessins annexés dans lesquels :
- la figure 1 est une vue en perspective des différents constituants de l'antivol avant leur assemblage ;
- la figure 2 est une vue en perspective d'une partie du boîtier dans lequel est monté l'antivol ;
- la figure 3 est une coupe axiale d'un organe de liaison ;
- la figure 4 est une coupe partielle de l'ensemble antivol une fois assemblé et introduit dans le boîtier ;
- la figure 5 est une coupe partielle suivant la ligne 5-5 de la figure 4.

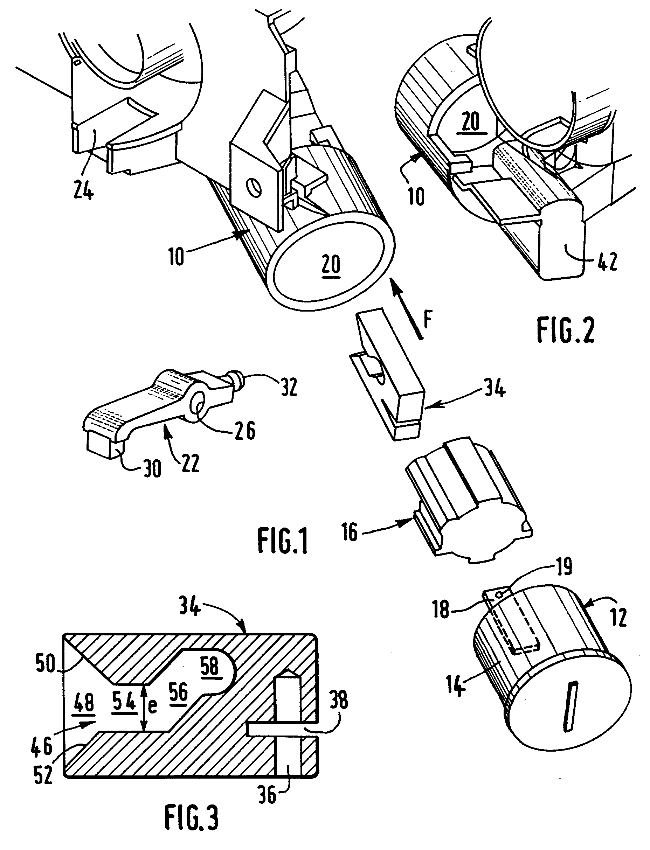

Sur la figure 1, on a représenté les différents constituants d'un antivol avant leur assemblage dans un boîtier 10 solidaire par exemple d'une colonne de direction d'un véhicule automobile.

L'antivol comprend un ensemble serrure 12 contenu dans un corps 14 constituant en général le stator de la serrure. De manière connue, la serrure 12 comprend un rotor actionné par une clé codée, et une came de commande située à l'arrière du rotor. Ces éléments ne faisant pas partie de la présente invention n'ont pas été représentés.

L'antivol comprend également un commutateur électrique 16 solidaire du corps de la serrure et destiné à l'alimentation électrique des différents circuits du véhicule en fonction de la position de la clé.

Une tirette 18 est solidaire de la came de la serrure et donc apte à se déplacer coaxialement à l'axe de la serrure.

L'ensemble serrure 12, interrupteur 16 est destiné à être introduit dans un alésage 20 du boîtier 10.

L'organe de verrouillage de l'antivol est constitué d'un pêne 22 destiné à être introduit dans un logement 24 du boitier 10, logement globalement perpendiculaire à l'axe de la serrure 12.

Le pêne 22 comprend dans sa partie centrale un alésage 26 recevant un axe d'articulation 28 (voir figure 4), solidaire du corps 10 de manière à permettre un pivotement dudit pêne, pivotement s'effectuant selon une direction perpendiculaire à l'axe de l'ensemble serrure 12.

Le pêne 22 présente à l'une de ses extrémités une dent 30 qui, dans la position de verrouillage de l'antivol, coopère avec un secteur denté (non représenté) de la colonne de direction.

Le pêne 22 présente à l'extrémité opposée à la dent 30 une rotule 32 dont le rôle sera explicité ci-après.

L'antivol comprend également des moyens de commande aptes à faire passer le pêne 22 d'une position de verrouillage à une position de déverrouillage. Ces moyens de commande sont constitués d'un organe de liaison ou coulisseau 34 se présentant sous une forme globalement parallélépipèdique.

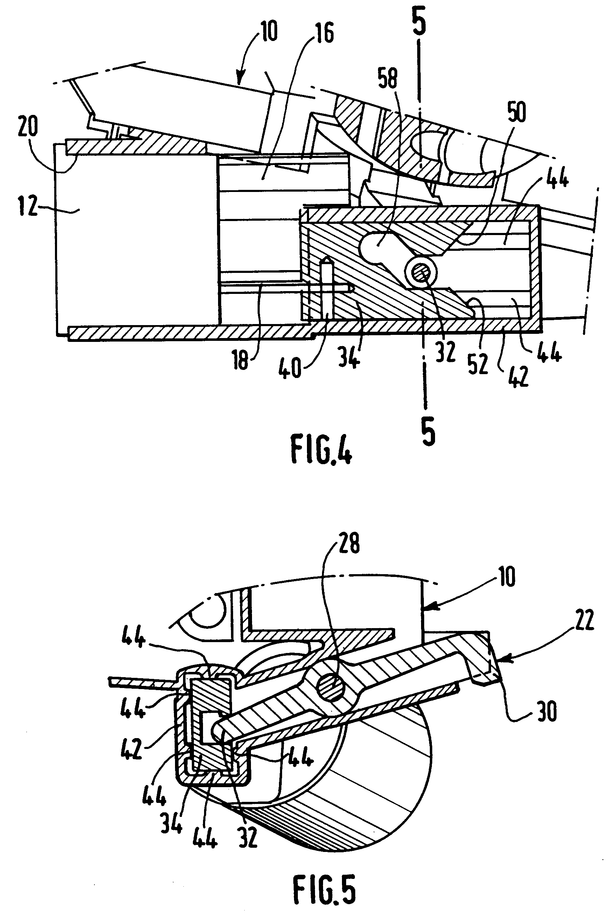

Le coulisseau 34 présente un trou borgne 36 (figure 3) traversant une fente axiale 38 destinée à recevoir l'extrémité de la tirette 18 comportant un trou 19 d'un diamètre sensiblement égal au trou borgne 36 du coulisseau 34.

Ainsi qu'on peut le voir en particulier figure 3, le coulisseau 34 est rendu solidaire de la tirette 18 par un pion 40 et est donc coaxial à la serrure 12.

Le boîtier 10 comprend des moyens de guidage axial du coulisseau 34, constitués par un fourreau 42 coaxial à l'axe de la serrure et comportant à l'intérieur des nervures intérieures de guidage 44, au nombre de cinq dans l'exemple représenté et réparties sur les parois internes du fourreau 42.

Le coulisseau 34 présente une rainure axiale 46 (figure 3) comportant successivement une entrée évasée 48 par deux chanfreins 50,52, un premier palier 54 raccordé à un second palier 58 par une rampe 56.

La largeur e des premier et second paliers 54,58 et de la rampe 56 est sensiblement égale au diamètre de la rotule 32 du pêne 22.

L'assemblage d'un tel antivol s'effectue de la manière suivante :

Le pêne 22 est introduit dans le logement 24 du boitier 10 et monté pivotant autour de l'axe 28 solidaire du boitier 10.

Le coulisseau 34 est rendu solidaire de l'ensemble serrure 12, tirette 18 et l'ensemble est introduit dans l'alésage 20 du boîtier 10 suivant la flèche F de la figure 1.

Lors de l'introduction, le coulisseau 34 pénètre dans le fourreau 42 où il est guidé en translation par les nervures intérieures 44 et vient en contact avec la rotule 32 située à l'extrémité du pêne 22.

De par son entrée évasée 48 la rotule 32 vient obligatoirement en contact avec l'un des chanfreins 50,52 et ceci quelle que soit l'orientation angulaire du pêne 22 dans son logement 24.

En continuant le déplacement axial de l'ensemble serrure 12, coulisseau 34, la rotule 32 glisse le long d'un des chanfreins 50,52 et vient se loger dans le premier palier 54, comme représenté figures 4 et 5 ce qui correspond à une première position stable du pêne 22, dite position de repos de déverrouillage.

Ainsi, bien que l'ensemble pêne 22 et l'ensemble serrure 12, coulisseau 34 soit introduit séparément dans le boitier 10 on réalise une solidarisation des deux ensembles de manière particulièrement simple et sans aucune intervention spécifique.

La rotation de la serrure 12 par une clé conforme entraîne une rotation de la came et donc un déplacement coaxial de la tirette 18 et du coulisseau 34.

Autrement dit, le coulisseau 34 est mobile parallèlement à l'axe de l'ensemble serrure 12.

Le déplacement coaxial du coulisseau 34 a pour résultat le passage de la rotule 32 du pêne 22 du premier palier 54 au second palier 58 de la rainure 46, ce passage s'effectuant pour l'utilisateur sans effort particulier grâce à la présence de la rampe 56.

Le passage de la rotule 32 du premier palier 54 au second palier 58 provoque un basculement angulaire du pêne 22 autour de son axe 28 et donc une pénétration de la dent 30 dans l'organe de verrouillage (non représenté). Ainsi le second palier 58 correspond à une seconde position stable du pêne 22, dite position de travail ou de verrouillage.

Le coulisseau 34 permet grâce à sa configuration précédemment décrite de transformer un mouvement de translation coaxiale à la serrure 12 en un mouvement de basculement angulaire du pêne 22 globalement perpendiculaire par rapport à ladite serrure 12.

Bien entendu la présente invention ne se limite pas aux formes de réalisation décrites ou représentées mais englobe toute variante que l'homme de l'art pourrait y apporter, dans le cadre des revendications ci-après.

## Revendications

1. Antivol de direction pour véhicule automobile comprenant un organe de verrouillage ou pêne (22) monté pivotant dans un boîtier (10) solidaire d'une colonne de direction, le pivotement de l'organe de verrouillage ou pêne (22) s'effectuant selon une direction perpendiculaire à l'axe d'un ensemble serrure (12) muni d'une came de commande équipée d'une tirette (18) et des moyens de commande aptes à faire passer le pêne (22) d'une position de verrouillage à une position de déverrouillage, constitues d'un organe de liaison ou coulisseau (34) solidaire de la tirette (18) et mobile en translation parallèlement à l'axe de l'ensemble serrure (12), caractérisé en ce que
l'organe de liaison ou coulisseau (34) est fixe en rotation par rapport au boîtier (10), le passage de l'organe de verrouillage ou pêne (22) de ladite position de verrouillage à ladite position de déverrouillage étant obtenu par la translation sans rotation de l'organe de liaison ou coulisseau (34),
en ce que l'organe de verrouillage ou pêne (22) comprend à l'une de ses extrémités une rotule (32) apte à coopérer avec une rainure axiale (46) ménagée dans l'organe de liaison ou coulisseau (34)
et en ce que la rainure axiale (46) comporte un entrée évasée (48) par deux chanfreins (50,52).

2. Antivol selon la revendication 1 caractérisé en ce que la rainure axiale (46) présente un premier palier (54) raccordé à un second palier (58) par une rampe (56).

3. Antivol selon la revendication 2, caractérisé en ce que la largeur (e) des paliers (54,58) est sensiblement égale au diamètre de la rotule (32) de l'organe de verrouillage ou pêne (22).

4. Antivol selon la revendication 1, caractérisé en ce que des moyens de guidage du coulisseau (34) constitués par un fourreau (42) ménagés dans le boîtier (10).

5. Antivol selon la revendication 4, caractérisé en ce que le fourreau (42) comporte des rainures intérieures de guidage (44).

## Claims

1. Steering anti-theft device for a motor vehicle comprising a locking member or bolt (22) pivotally mounted in a casing (10) fixed to a steering column, the pivoting of the locking member or bolt (22) occurring in a direction perpendicular to the axis of a lock assembly (12) provided with a control cam equipped with a pull (18) and control means suitable for causing the bolt (22) to move from a locking position to an unlocking position, consisting of a connection member or slide (34) fixed to the pull (18) and able to move in translation parallel to the axis of the lock assembly (12), characterised in that
the connection member or slide (34) is fixed with respect to rotation to the casing (10), the movement of the locking member or bolt (22) from the said locking position to the said unlocking position being obtained by translation without rotation of the connection member or slide (34),
in that the locking member or bolt (22) comprises at one of its ends a swivel (32) suitable for cooperating with an axial groove (46) formed in the connection member or slide (34)
and in that the axial groove (46) has an entry (48) which is splayed by means of two bevels (50, 52).

2. Anti-theft device according to Claim 1, characterised in that the axial groove (46) has a first step (54) connected to a second step (58) by a ramp (56).

3. Anti-theft device according to Claim 2, characterised in that the width (e) of the steps (54, 58) is substantially equal to the diameter of the swivel (32) of the locking member or bolt (22).

4. Anti-theft device according to Claim 1, characterised in that guide means for the slide (34) formed by a sleeve (42) formed in the casing (10).

5. Anti-theft device according to Claim 4, characterised in that the sleeve (42) has internal guide grooves (44).

## Patentansprüche

1. Lenkradschloß für Kraftfahrzeuge, das ein Verriegelungsorgan oder einen Riegel (22) umfaßt, der schwenkbar in einem fest mit der Lenksäule verbundenen Gehäuse (10) gelagert ist, wobei das Schwenken des Verriegelungsorgans oder Riegels (22) in einer Richtung erfolgt, die senkrecht zur Achse einer Schloßeinheit (12) verläuft, die einen Betätigungsnocken mit einem Zugstück (18) und Betätigungsmittel aufweist, die den Riegel (22) von einer Verriegelungsposition in eine Entriegelungsposition verbringen können und die aus einem Verbindungsorgan oder Gleitstück (34) bestehen, das fest mit dem Zugstück (18) verbunden und parallel zur Achse der Schloßeinheit (12) geradlinig beweglich gelagert ist **, dadurch gekennzeichnet,** daß das Verbindungsorgan oder Gleitstück (34) drehfest im Verhältnis zum Gehäuse (10) gelagert ist, wobei der Übergang des Verriegelungsorgans oder Riegels (22) von der besagten Verriegelungsposition zu der besagten Entriegelungsposition durch die drehungsfreie Verschiebung des Verbindungsorgans oder Gleitstücks (34) herbeigeführt wird, daß das Verriegelungsorgan oder der Riegel (22) an einem seiner Enden ein Kugelgelenk (32) umfaßt, das mit einer axialen Nut (46) zusammenwirken kann, die in das Verbindungsorgan oder Gleitstück (34) eingearbeitet ist, und daß die axiale Nut (46) einen durch zwei Abschrägungen (50, 52) konisch erweiterten Eingang (48) aufweist.

2. Lenkradschloß nach Anspruch 1, **dadurch gekennzeichnet,** daß die axiale Nut (46) einen ersten Absatz (46) aufweist, der über eine Schräge (56) mit einem zweiten Absatz (58) verbunden ist.

3. Lenkradschloß nach Anspruch 2, **dadurch gekennzeichnet,** daß die Breite (3) der Absätze (54, 58) in etwa gleich dem Durchmesser des Kugelgelenks (32) des Verriegelungsorgans oder Riegels (22) ist.

4. Lenkradschloß nach Anspruch 1, **dadurch gekennzeichnet,** daß Führungsmittel für das Gleitstück (34) aus einer im Gehäuse (10) angeordneten Hülse (42) bestehen.

5. Lenkradschloß nach Anspruch 4, **dadurch gekennzeichnet,** daß die Hülse (42) innere Führungsnuten (44) enthält.
